# FASCICULE DE BREVET EUROPEEN

(11) **EP 2 150 423 B1**
(45) Date de publication et mention de la délivrance du brevet: **08.08.2012**
(21) Numéro de dépôt: 08736188.7
(22) Date de dépôt: 14.04.2008
(51) Int. Cl.: B60C 9/09

(54) **PNEUMATIQUE POUR VEHICULE COMPORTANT DES RENFORTS DANS LES FLANCS**
REIFEN FÜR FAHRZEUG MIT VERSTÄRKUNGEN IN DEN SEITENWÄNDEN
TYRE FOR VEHICLE INCLUDING REINFORCEMENTS IN THE SIDEWALLS

(30) Priorité: 23.04.2007 FR 0702920
(43) Date de publication de la demande: 10.02.2010
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HONNEUR, Franck, F-63100 Clermont-Ferrand (FR)
(74) Mandataire: Le Cam, Stéphane Georges Elie
(86) Numéro de dépôt international: PCT/EP2008/054486
(87) Numéro de publication internationale: WO 2008/128917

(56) Documents cités:
- EP-A- 0 204 868
- EP-A- 0 507 184
- WO-A-02/096674
- WO-A-2006/098112
- JP-A- 11 278 019
- US-A- 5 164 029
- US-A- 5 301 730

## Description

La présente invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

Le document EP-A-0 204 868 décrit un pneumatique comportant une couche de mélange caoutchouteux à bas module dans les flancs pour limiter la propagation de fissures.

Dans leurs études, les inventeurs ont mis en évidence que pour augmenter la transmission des couples moteur et freineur et des efforts de poussée latérale par l'intermédiaire des pneumatiques, une solution consiste à rouler à des pressions inférieures à celles usuellement prescrites et notamment à des pressions inférieures à 2 bars, voir inférieures à 1.5 bars. Les pressions usuelles sont supérieures à 2 bars voire supérieures à 2.5 bars.

Les essais de roulage ainsi effectués ont confirmé l'augmentation de la transmission des couples moteur et freineur et des efforts de poussée latérale par l'intermédiaire des pneumatiques ; par contre, il apparaît qu'à ces pressions de gonflage des pneumatiques le pilote de la moto constate des problèmes de comportement et notamment des problèmes de sensation selon la direction latérale du pneumatique c'est-à-dire selon la direction perpendiculaire dans le plan du sol à la direction définie par les deux points de centre géométrique d'aires de contact de chacun des pneumatiques.

L'invention a pour but de réaliser des pneumatiques pour motocyclette, destiné à être utilisés en roulage à des pressions inférieures à 2 bars, sans nuire pour autant aux propriétés nécessaires à la satisfaction des utilisateurs.

Ce but a été atteint selon l'invention par un pneumatique comportant une structure de renfort de type carcasse, formée d'éléments de renforcement, le pneumatique comportant des bourrelets dont la base est destinée à être montée sur un siège de jante, chaque bourrelet se prolongeant radialement vers l'extérieur par un flanc, les flancs rejoignant radialement vers l'extérieur une bande de roulement, l'intersection des flancs et de la bande de roulement définissant les extrémités d'épaulement du pneumatique, et comportant sous la bande de roulement une structure de renforcement de sommet, ledit pneumatique comportant encore dans la zone de chacun des flancs au moins une couche de matériaux présentant une rigidité d'extension selon la direction longitudinale supérieure à 5000 daN/mm et l'extrémité radialement extérieure de ladite couche de matériaux étant radialement intérieure aux extrémités d'épaulement du pneumatique.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

Une extrémité d'épaulement est définie, dans la zone de l'épaule du pneumatique, lorsque ce dernier est monté sur sa jante de service et gonflé, par la projection orthogonale sur la surface extérieure du pneumatique de l'intersection des tangentes aux surfaces d'une extrémité axialement extérieure de la bande de roulement d'une part et de l'extrémité radialement extérieure d'un flanc d'autre part.

Dans le cas des pneumatiques pour motocyclettes, les extrémités d'épaulement correspondent aux points axialement les plus à l'extérieur du pneumatique.

La rigidité d'extension selon la direction longitudinale de la couche de matériaux est déterminée de manière connue de l'homme du métier à partir de mesures dynamométriques de la couche ou des matériaux la constituant.

Par exemple, en ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984 ;

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979) ;

En ce qui concerne les fils ou câbles textiles, les propriétés mécaniques sont mesurées sur des fibres ayant été soumises à un conditionnement préalable. Par "conditionnement préalable", on entend le stockage des fibres pendant au moins 24 heures, avant mesure, dans une atmosphère standard selon la norme européenne DIN EN 20139 (température de 20 ± 2°C ; hygrométrie de 65 ± 2 %). Les propriétés mécaniques en extension (ténacité, module, allongement et énergie à la rupture) sont mesurées de manière connue à l'aide d'une machine de traction ZWICK GmbH & Co (Allemagne) de type 1435 ou de type 1445. Les fibres, après avoir reçu une faible torsion de protection préalable (angle d'hélice de 6° environ), subissent une traction sur une longueur initiale de 400 mm à une vitesse nominale de 200 mm/min. Tous les résultats sont une moyenne de 10 mesures.

Selon un mode de réalisation préféré de l'invention, la distance radiale entre l'extrémité radialement extérieure de la couche de matériaux, présentant une rigidité d'extension selon la direction longitudinale supérieure à 5000 daN/mm, et l'extrémité radialement intérieure du pneumatique est comprise entre 50 % et 80 % et de préférence entre 50 % et 75 % de la distance radiale entre une extrémité d'épaulement et l'extrémité radialement intérieure du pneumatique.

De préférence encore, la distance radiale entre l'extrémité radialement intérieure de ladite couche de matériaux et l'extrémité radialement intérieure du pneumatique est comprise entre 10 et 65 % et de préférence supérieure à 40 % et de préférence encore supérieure à 50 % de la distance radiale entre une extrémité d'épaulement et l'extrémité radialement intérieure du pneumatique.

Les mesures de distances radiales précédemment décrites sont effectuées sur un pneumatique monté sur jante et gonflé à une pression de 1.5 bar, la pression étant mesurée à chaud, c'est-à-dire le pneumatique ayant parcouru un roulage conduisant à sa température de fonctionnement.

Avantageusement, lorsque le pneumatique est monté sur une jante comportant des crochets de jante et gonflé à une pression de 1.5 bar, la distance radiale entre l'extrémité radialement extérieure de la couche de matériaux et l'extrémité radialement extérieure du crochet de jante est comprise entre 20 % et 60 % et de préférence supérieur à 40 % de la distance radiale entre l'extrémité d'épaulement et l'extrémité radialement extérieure du crochet de jante.

Avantageusement encore lorsque le pneumatique est monté sur une jante comportant des crochets de jante et gonflé à une pression de 1.5 bar, la distance radiale entre l'extrémité radialement intérieure de la couche de matériaux et l'extrémité radialement extérieure du crochet de jante est inférieure à 30 % et de préférence inférieure à 10 % de la distance radiale entre une extrémité d'épaulement et l'extrémité radialement extérieure du crochet de jante.

Selon l'invention, la distance curviligne entre la projection orthogonale de l'extrémité radialement extérieure de la couche de matériaux sur la surface extérieure du flanc et le point radialement le plus intérieur de la surface extérieure du flanc est avantageusement comprise entre 50 % et 80 % et de préférence entre 50 % et 75 % de la distance curviligne entre une extrémité d'épaulement et le point radialement le plus intérieur de la surface extérieure du flanc.

De même, la distance curviligne entre la projection orthogonale de l'extrémité radialement intérieure de la couche de matériaux sur la surface extérieure du flanc et le point radialement le plus intérieur de la surface extérieure du flanc est avantageusement comprise entre 10 et 65 % et de préférence supérieure à 40 % et de préférence encore supérieure à 50 % de la distance curviligne entre une extrémité d'épaulement et le point radialement le plus intérieur de la surface extérieure du flanc.

Le point radialement le plus intérieur de la surface extérieure du flanc est défini, dans la zone du bourrelet du pneumatique par la projection orthogonale sur la surface extérieure du pneumatique de l'intersection des tangentes aux surfaces d'une extrémité axialement extérieure de la surface radialement intérieure d'un bourrelet d'une part et de l'extrémité radialement intérieure d'un flanc d'autre part.

Selon une première variante de réalisation de l'invention, la couche de matériaux est constituée d'au moins une couche d'éléments de renforcement orientés selon la direction circonférentielle.

Selon l'invention, les éléments de renforcement sont considérés comme orientés selon la direction circonférentielle lorsqu'ils forment un angle avec la direction longitudinale inférieur à 8°.

Avantageusement, selon cette variante de réalisation de l'invention, les éléments de renforcement orientés selon la direction circonférentielle sont métalliques et de préférence en acier.

Selon cette variante de réalisation de l'invention, les éléments de renforcement orientés selon la direction circonférentielle peuvent encore être en aramide et la couche de matériaux est constituée de plusieurs couches d'éléments de renforcement orientés selon la direction circonférentielle. Une telle réalisation peut être intéressante en termes de masse du pneumatique. L'aramide présente en outre l'avantage de mieux accepter les contraintes de compression.

Selon une deuxième variante de réalisation de l'invention, la couche de matériaux est constituée d'au moins deux couche d'éléments de renforcement parallèles entre eux dans chaque couche et croisés d'une couche à la suivante en formant avec la direction circonférentielle des angles compris entre 10° et 45°.

Selon une troisième variante de réalisation de l'invention, la couche de matériaux est constituée d'au moins une couche de mélanges polymériques. Selon cette dernière variante de réalisation, il peut s'agir d'une couche d'un seul mélange polymérique ou bien une couche combinant plusieurs mélanges polymériques. Dans ces deux cas, les mélanges polymériques peuvent encore être renforcés, par exemple par des charges ou des fibres courtes.

Selon l'une ou l'autre de ces variantes de réalisation de l'invention, ladite couche de matériaux est soit axialement intérieure soit axialement extérieure à la structure de renfort de type carcasse. Dans le cas de la deuxième variante de réalisation selon laquelle la couche de matériaux est constituée d'au moins deux couche d'éléments de renforcement parallèles entre eux dans chaque couche et croisés d'une couche à la suivante, l'invention prévoit avantageusement que les couches d'éléments de renforcement sont réparties axialement de part et d'autres de la structure de renfort de type carcasse. Selon d'autres modes de réalisations de pneumatiques selon l'invention comportant au moins deux couches de matériaux telles que définies précédemment, lesdites couches peuvent être comme dans le cas d'une seule couche soit axialement intérieure soit axialement extérieure à la structure de renfort de type carcasse soit encore réparties axialement de part et d'autre de la structure de renfort de type carcasse.

Le pneumatique ainsi défini selon l'invention autorise des roulages sur motocyclettes avec des pressions de gonflage inférieures à 2 bars, voire inférieures à 1.5 bar. Comparés à des pneumatiques semblables d'un point de vue conception mais ne comportant pas de couches de matériaux insérés dans les flancs et gonflés à des pressions usuelles supérieures à 2 bars, il s'est avéré conformément aux attentes qu'il est possible de passer des couples moteurs et freineurs et des efforts de poussée latérale plus importants avec des pneumatiques conformes à l'invention et gonflés à des pressions de l'ordre de 1.5 bar. En outre, concernant le comportement et notamment les sensations selon la direction latérale du pneumatique lors des roulages, les pilotes essayeurs ne font plus mention d'aucune différence entre les pneumatiques conformes à l'invention et gonflés à des pressions de l'ordre de 1.5 bar et les pneumatiques usuels gonflés à des pressions supérieures.

Les inventeurs pensent interpréter ces résultats en matière de comportement, par rapport un pneumatique usuel qui serait gonflé à une pression inférieure à 2 bars, par une augmentation des contraintes imposés aux éléments de renforcement de la structure de carcasse lors du gonflage du fait de la présence de la couche de matériaux et de ses propriétés en termes de rigidité d'extension selon la direction longitudinale qui induisent un profil différent du pneumatique dans la zone du flanc. Cette augmentation des contraintes semble compenser la diminution de la pression de gonflage par rapport aux pressions usuelles de gonflage en ce qui concerne les propriétés de comportement du véhicule en roulage et notamment les sensations selon la direction latérale du pneumatique observées par les pilotes essayeurs.

L'invention propose encore un pneumatique comportant une structure de renfort de type carcasse, formée d'éléments de renforcement, le pneumatique comportant des bourrelets dont la base est destinée à être montée sur un siège de jante, chaque bourrelet se prolongeant radialement vers l'extérieur par un flanc, les flancs rejoignant radialement vers l'extérieur une bande de roulement, l'intersection des flancs et de la bande de roulement définissant les extrémités d'épaulement du pneumatique, et comportant sous la bande de roulement une structure de renforcement de sommet, le pneumatique présentant sur la surface extérieure de chacun des flancs un bossage s'étendant circonférentiellement et dont le rayon de courbure est compris entre 8 et 20 mm.

La courbure d'un flanc du pneumatique ainsi défini selon l'invention présente avantageusement un point d'inflexion radialement extérieur au bossage, ce point d'inflexion étant radialement intérieur aux extrémités d'épaulement du pneumatique.

Avantageusement encore, le pneumatique étant monté sur une jante comportant des crochets de jante, la courbure d'un flanc présente un point d'inflexion radialement intérieur au bossage.

Un tel pneumatique est avantageusement réalisé selon une technique du type sur noyau dur ou toroïdal qui autorise notamment la mise en place des éléments de renforcement dans la position quasi-finale ; en effet, une étape de conformation n'étant pas requise selon ce type de procédé les éléments de renforcement ne sont plus déplacés après leur mise en place.

Une variante de réalisation de l'invention prévoit encore que la structure de renfort de type carcasse ne s'étendent pas d'un bourrelet à l'autre mais d'un flanc à l'autre les extrémités de la structure de renfort de type carcasse étant radialement proches des extrémités radialement intérieures des couches de matériaux insérées dans les flancs et de préférence radialement intérieures aux extrémités radialement intérieures desdites couches de matériaux. Une telle réalisation est notamment facilitée par une réalisation selon une technique de type sur noyau dur.

Avantageusement, dans le cas d'une structure radiale, les éléments de renforcement de la structure de renfort de type carcasse font avec la direction circonférentielle un angle compris entre 65° et 90°.

Une réalisation avantageuse de l'invention prévoit encore que la structure de renfort de type carcasse est constituée de deux demi-couches s'étendant par exemple des épaules aux bourrelets. Selon la nature, la quantité et la disposition des éléments de renfort de sommet, l'invention prévoit effectivement la suppression de la structure de carcasse dans au moins une partie de la zone du pneumatique se trouvant sous la bande de roulement. La réalisation d'une telle structure de carcasse peut être faite selon l'enseignement du document EP-A-0 844 106. Les positions relatives précédemment énoncées des différentes couches de la structure de renforcement de sommet sont également compatibles avec une telle structure de carcasse.

Selon un mode de réalisation de l'invention, la structure de renforcement de sommet du pneumatique comporte au moins une couche d'éléments de renforcement dite couche de travail, dont les éléments de renforcement parallèles entre eux et faisant un angle d'au moins 15° avec la direction longitudinale.

Avantageusement selon l'invention, la structure de renforcement de sommet comporte au moins deux couches d'éléments de renforcement parallèles entre eux et croisés d'une couche à la suivante.

Selon ce dernier type de réalisation de l'invention, les éléments de renforcement de deux couches de travail radialement adjacentes forment avantageusement entre eux des angles compris entre 20 et 160° et de préférence entre 40 et 100°.

Selon une réalisation préférée de l'invention, les éléments de renforcement des couches de travail sont en matériau textile.

Selon un autre mode de réalisation de l'invention, les éléments de renforcement des couches de travail sont en métal.

Selon d'autres modes de réalisation de l'invention, la structure de renforcement de sommet comporte au moins une couche d'éléments de renforcement circonférentiels.

Selon une réalisation préférée de l'invention, les éléments de renforcement de la couche d'éléments de renforcement circonférentiels de la structure de renforcement de sommet sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels de la structure de renforcement de sommet présentent un module d'élasticité supérieur à 6000 N/mm².

Une variante de réalisation de l'invention prévoit encore avantageusement dans le but de limiter le comportement vibratoire du pneumatique, notamment le « shimmy », qu'un moyen anti-vibration est disposé circonférentiellement dans la zone des épaules et s'étend radialement d'une part sensiblement radialement extérieurement vers le sommet et d'autre part sensiblement radialement intérieurement dans le flanc, ledit moyen anti-vibration comprenant au moins un alignement d'éléments de renforcements sensiblement circonférentiels. Un tel moyen anti-vibration est notamment décrit dans le document EP A 1 307 350.

D'autres détails et caractéristiques avantageux de l'invention ressortiront ci-après de la description des exemples de réalisation de l'invention en référence aux figures 1 à 5 qui représentent :

figure 1, une vue méridienne d'un schéma d'un pneumatique selon un mode de réalisation de l'invention,

figure 2, une vue méridienne d'un schéma d'un pneumatique selon l'invention monté sur jante,

figure 3, une vue méridienne d'une représentation schématique du bourrelet d'un pneumatique,

figure 4, une vue méridienne d'un schéma d'un pneumatique selon un deuxième mode de réalisation de l'invention,

figure 5, une vue méridienne d'un schéma d'un pneumatique selon un troisième mode de réalisation de l'invention.

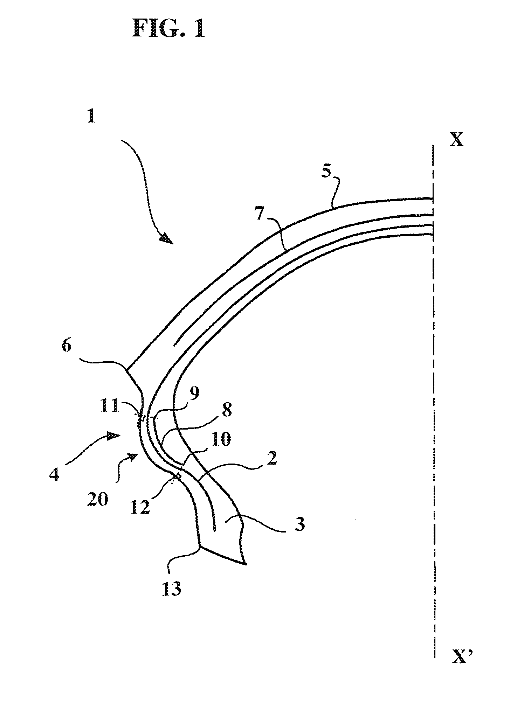

Les figures 1 à 5 ne sont pas représentées à l'échelle, et ceci pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

La figure 1 représente un pneumatique 1 de type 180/55 R 17 comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. L'intersection de la bande de roulement et du flanc forme l'extrémité d'épaulement 6 qui correspond au point axialement le plus à l'extérieur du pneumatique.

Le pneumatique 1 présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte en outre sous la bande de roulement une armature de sommet 7.

Conformément à l'invention, le pneumatique comporte une couche de matériaux 8 réalisé par un enroulement d'un câble métallique dont le diamètre compacté équivalent de métal est égal à 1.05 mm et le pas de l'enroulement étant égal à 1.4 mm. La rigidité d'extension de la couche de matériaux ainsi réalisée est de l'ordre de 10 000 daN/mm.

La distance curviligne entre la projection orthogonale 11 de l'extrémité radialement extérieure 9 de la couche de matériaux sur la surface extérieure du flanc 4 et le point 13 radialement le plus intérieur de la surface extérieure du flanc est égale à 74 % de la distance curviligne entre l'extrémité d'épaulement 6 et le point 13 radialement le plus intérieur de la surface extérieure du flanc.

La distance curviligne entre la projection orthogonale 12 de l'extrémité radialement intérieure 10 de la couche de matériaux sur la surface extérieure du flanc 4 et le point 13 radialement le plus intérieur de la surface extérieure du flanc est égale à 59 % de la distance curviligne entre l'extrémité d'épaulement 6 et le point 13 radialement le plus intérieur de la surface extérieure du flanc.

Cette figure montre également que le pneumatique présente sur la surface extérieure de son flanc 4 un bossage 20 qui s'étend circonférentiellement et dont le rayon de courbure est égal à 12 mm.

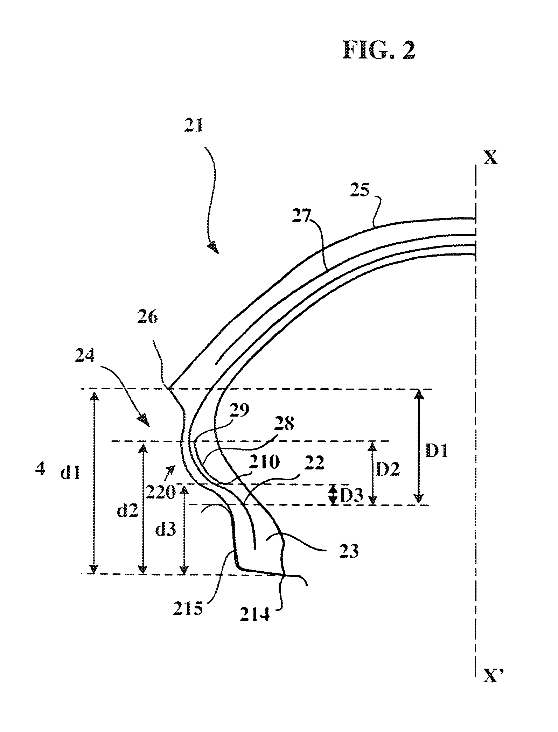

La figure 2 illustre un schéma d'un pneumatique 21 semblable à celui de la figure 1 monté sur une jante 215. La jante 215 n'est représentée que partiellement pour illustrer essentiellement sa zone de contact avec le bourrelet du pneumatique. Le pneumatique ainsi monté sur sa jante est gonflé à une pression de 1,5 bars.

Conformément à l'invention, la distance radiale d2 entre l'extrémité radialement extérieure 29 de la couche de matériaux 28 et l'extrémité radialement intérieure 214 du pneumatique est égale à 72 % de la distance radiale d1 entre une extrémité d'épaulement 26 et l'extrémité radialement intérieure du pneumatique 214.

La distance radiale d3 entre l'extrémité radialement intérieure 210 de la couche de matériaux 28 et l'extrémité radialement intérieure 214 du pneumatique est égale à 58 % de la distance radiale d1 entre une extrémité d'épaulement 26 et l'extrémité radialement intérieure du pneumatique 214.

La distance radiale D2 entre l'extrémité radialement extérieure 29 de la couche de matériaux 28 et l'extrémité radialement extérieure 14 du crochet de la jante 215 est égale à 54 % de la distance radiale D1 entre une extrémité d'épaulement 26 et l'extrémité radialement extérieure du crochet de la jante 215.

La distance radiale D3 entre l'extrémité radialement intérieure 210 de la couche de matériaux 28 et l'extrémité radialement extérieure du crochet de la jante 215 est égale à 27 % de la distance radiale D1 entre une extrémité d'épaulement 26 et l'extrémité radialement extérieure du crochet de la jante 215.

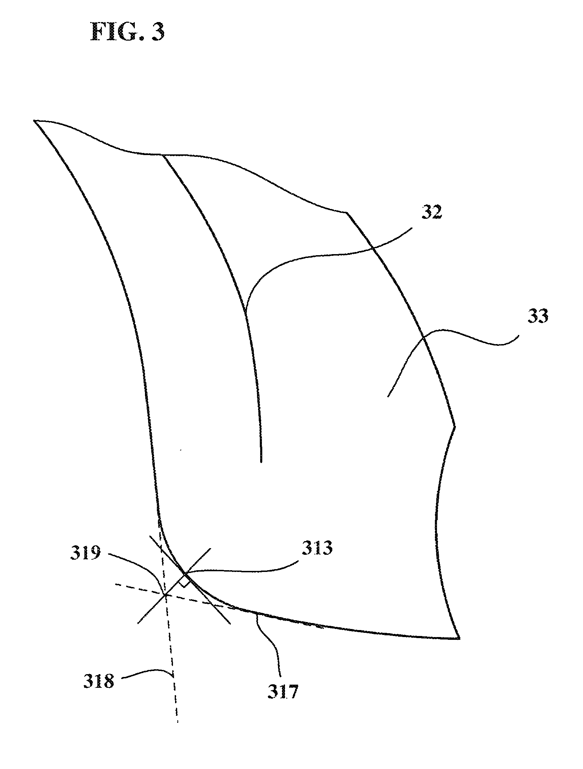

La figure 3 représente un schéma d'une vue partielle du bourrelet 33 d'un pneumatique semblable à celui de la figure 1 sur lequel est dessinée l'intersection 319 d'une première tangente 317 à la surface de l'extrémité axialement extérieure de la surface radialement intérieure du bourrelet 33 et d'une seconde tangente 318 à la surface axialement extérieure de l'extrémité radialement intérieure du flanc 34. La projection orthogonale de l'intersection 319 de ces deux tangentes 317, 318 sur la surface extérieure du pneumatique définit le point radialement le plus intérieur de la surface extérieure du flanc 34.

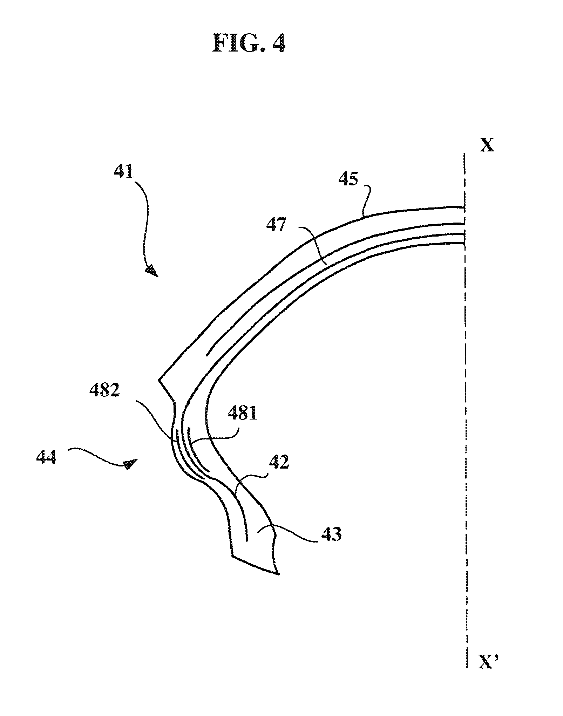

La figure 4 illustre un schéma d'un pneumatique selon un deuxième mode de réalisation de l'invention. Le pneumatique 41 de la figure 4 diffère de celui de la figure 1 en ce que le pneumatique comporte deux couches de matériaux 481, 482 disposées axialement de part et d'autre de couche de carcasse 2. Selon cette réalisation de l'invention chacune des deux couches de matériaux 481, 482 sont réalisées par un enroulement d'un câble métallique dont le diamètre compacté équivalent de métal est égal à 1.05 mm et le pas de l'enroulement étant égal à 1.4 mm. La rigidité d'extension de chacune des couches de matériaux 481, 482 ainsi réalisée est de l'ordre de 10 000 daN/mm.

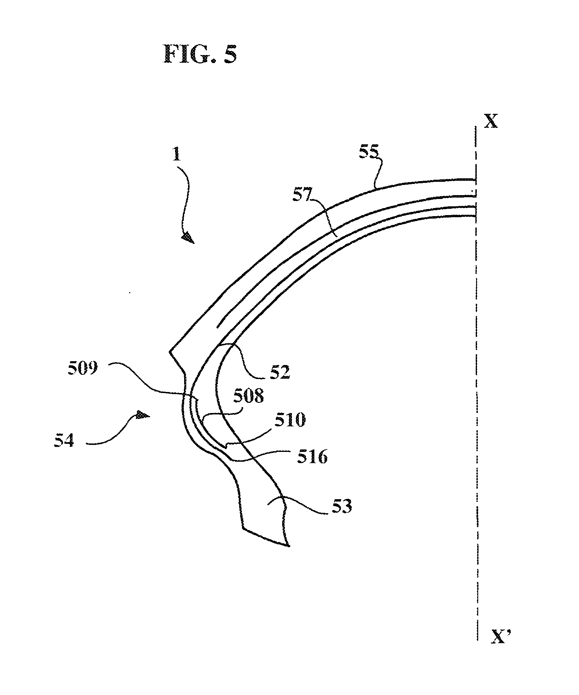

La figure 5 illustre un schéma d'un pneumatique selon un troisième mode de réalisation de l'invention. Le pneumatique 51 de la figure 5 diffère de celui de la figure 1 en ce que le pneumatique comporte une couche de carcasse 52 dont l'extrémité radialement intérieure 516 ne s'étend pas jusque la zone du bourrelet 53 mais s'arrête radialement au niveau de l'extrémité radialement intérieure 510 de la couche de matériau 58 et plus exactement légèrement radialement à l'intérieur de ladite extrémité. Une telle variante de réalisation est plus particulièrement adaptée au cas d'un pneumatique fabriqué sur noyau dur qui ne comporte pas de tringle mais une architecture d'ancrage, non représentée sur la figure, qui dans un tel cas serait adaptée à la dimension de la couche de carcasse 52.

## Revendications

1. Pneumatique (1) comportant une structure de renfort de type carcasse (2), formée d'éléments de renforcement, le pneumatique comportant des bourrelets (3) dont la base est destinée à être montée sur un siège de jante, chaque bourrelet se prolongeant radialement vers l'extérieur par un flanc (4), les flancs rejoignant radialement vers l'extérieur une bande de roulement (5), l'intersection des flancs et de la bande de roulement définissant les extrémités d'épaulement (6) du pneumatique, et comportant sous la bande de roulement une structure de renforcement de sommet (7), **caractérisé en ce qu'**il comporte dans la zone de chacun des flancs (4) au moins une couche de matériaux (8) présentant une rigidité d'extension selon la direction longitudinale supérieure à 5000 daN/mm et **en ce que** l'extrémité radialement extérieure (9) de ladite couche de matériaux (8) est radialement intérieure aux extrémités d'épaulement (6) du pneumatique.

2. Pneumatique (21) selon la revendication 1, **caractérisé en ce que** la distance radiale (d2) entre l'extrémité radialement extérieure (29) de la couche de matériaux (28) et l'extrémité radialement intérieure du pneumatique (214) est comprise entre 50 % et 80 % de la distance radiale (d1) entre une extrémité d'épaulement (26) et l'extrémité radialement intérieure (214) du pneumatique.

3. Pneumatique selon la revendication 1 ou 2, **caractérisé en ce que** la distance radiale (d3) entre l'extrémité radialement intérieure (210) de la couche de matériaux (28) et l'extrémité radialement intérieure du pneumatique (214) est comprise entre 40 % et 65 % de la distance radiale (d1) entre une extrémité d'épaulement (26) et l'extrémité radialement intérieure du pneumatique (214).

4. Pneumatique (21) selon l'une des revendications 1 à 3, le pneumatique étant monté sur une jante (215) comportant des crochets de jante et gonflé à une pression de 1.5 bar, **caractérisé en ce que** la distance radiale (D2) entre l'extrémité radialement extérieure (29) de la couche de matériaux (28) et l'extrémité radialement extérieure du crochet de jante est comprise entre 40 % et 60 % de la distance radiale (D1) entre une extrémité d'épaulement (26) et l'extrémité radialement extérieure du crochet de jante.

5. Pneumatique (21) selon l'une des revendications précédentes, le pneumatique étant monté sur une jante (215) comportant des crochets de jante et gonflé à une pression de 1.5 bar, **caractérisé en ce que** la distance radiale (D3) entre l'extrémité radialement intérieure (210) de la couche de matériaux (28) et l'extrémité radialement extérieure du crochet de jante est inférieure à 30 % de la distance radiale (D1) entre une extrémité d'épaulement (26) et l'extrémité radialement extérieure du crochet de jante.

6. Pneumatique (1) selon l'une des revendications précédentes, **caractérisé en ce que** la distance curviligne entre la projection orthogonale (11) de l'extrémité radialement extérieure (9) de la couche de matériaux (8) sur la surface extérieure du flanc (4) et le point (13) radialement le plus intérieur de la surface extérieure du flanc (4) est comprise entre 50 % et 80 % de la distance curviligne entre une extrémité d'épaulement (6) et le point (13) radialement le plus intérieur de la surface extérieure du flanc (4).

7. Pneumatique (1) selon l'une des revendications précédentes, **caractérisé en ce que** la distance curviligne entre la projection orthogonale (12) de l'extrémité radialement intérieure (10) de la couche de matériaux (8) sur la surface extérieure du flanc (4) et le point (13) radialement le plus intérieur de la surface extérieure du flanc (4) est comprise entre 40 % et 65 % de la distance curviligne entre une extrémité d'épaulement (6) et le point (13) radialement le plus intérieur de la surface extérieure du flanc (4).

8. Pneumatique (1) selon l'une des revendications précédentes, **caractérisé en ce que** la couche de matériaux (8) est constituée d'au moins une couche d'éléments de renforcement orientés selon la direction circonférentielle.

9. Pneumatique (1) la revendication 8, **caractérisé en ce que** les éléments de renforcement orientés selon la direction circonférentielle sont métalliques.

10. Pneumatique (1) selon l'une des revendications précédentes, **caractérisé en ce que** la couche de matériaux (8) est constituée d'au moins deux couche d'éléments de renforcement parallèles entre eux dans chaque couche et croisés d'une couche à la suivante en formant avec la direction circonférentielle des angles compris entre 10° et 45°.

11. Pneumatique (1) selon l'une des revendications précédentes, **caractérisé en ce que** la couche de matériaux (8) est constituée d'au moins une couche de mélanges polymériques.

12. Pneumatique (1) selon l'une des revendications précédentes, **caractérisé en ce qu'il** présente sur la surface extérieure de chacun des flancs (4) un bossage (20) s'étendant circonférentiellement dont le rayon de courbure est compris entre 8 et 20 mm.

13. Pneumatique (1) selon la revendication 12, **caractérisé en ce que** la courbure d'un flanc (4) présente un point d'inflexion radialement extérieur au bossage (20) et **en ce que** ce point d'inflexion est radialement intérieur aux extrémités d'épaulement (6) du pneumatique.

14. Pneumatique (21) selon la revendication 12 ou 13, le pneumatique étant monté sur une jante (215) comportant des crochets de jante, **caractérisé en ce que** la courbure d'un flanc (24) présente un point d'inflexion radialement intérieur au bossage (220).

15. Utilisation d'un pneumatique (1) tel que décrit selon l'une des revendications 1 à 14 pour un véhicule motorisé à deux roues tel qu'une motocyclette.

## Claims

1. Tire (1) comprising a carcass-type reinforcement structure (2), consisting of reinforcing elements, the tire comprising beads (3), the base of which is designed to be fitted on a rim seat, each bead being extended radially outwardly by a sidewall (4), the sidewalls meeting radially outwardly with a tread (5), the intersection of the sidewalls and of the tread defining the shoulder ends (6) of the tire, and comprising, under the tread, a crown reinforcement structure (7), **characterized in that** it includes, in the area of each of the sidewalls (4), at least one layer of materials (8) having a stretch rigidity in the longitudinal direction greater than 5000 daN/mm and **in that** the radially outer end (9) of said layer of materials (8) is radially inside the shoulder ends (6) of the tire.

2. Tire (21) according to Claim 1, **characterized in that** the radial distance (d2) between the radially outer end (29) of the layer of materials (28) and the radially inner end (214) of the tire is between 50% and 80% of the radial distance (d1) between a shoulder end (26) and the radially inner end (214) of the tire.

3. Tire according to Claim 1 or 2, **characterized in that** the radial distance (d3) between the radially inner end (210) of the layer of materials (28) and the radially inner end (214) of the tire is between 40% and 65% of the radial distance (d1) between a shoulder end (26) and the radially inner end (214) of the tire.

4. Tire (21) according to one of Claims 1 to 3, the tire being fitted on a rim (215) including hooks and inflated to a pressure of 1.5 bar, **characterized in that** the radial distance (D2) between the radially outer end (29) of the layer of materials (28) and the radially outer end of the hook is between 40% and 60% of the radial distance (D1) between a shoulder end (26) and the radially outer end of the hook.

5. Tire (21) according to one of the preceding claims, the tire being fitted on a rim (215) including hooks and inflated to a pressure of 1.5 bar, **characterized in that** the radial distance (D3) between the radially inner end (210) of the layer of materials (28) and the radially outer end of the hook is less than 30% of the radial distance (D1) between a shoulder end (26) and the radially outer end of the hook.

6. Tire (1) according to one of the preceding claims, **characterized in that** the curvilinear distance between the orthogonal projection (11) of the radially outer end (9) of the layer of materials (8) on the outer surface of the sidewall (4) and the radially innermost point (13) of the outer surface of the sidewall (4) is between 50% and 80% of the curvilinear distance between a shoulder end (6) and the radially innermost point (13) of the outer surface of the sidewall (4).

7. Tire (1) according to one of the preceding claims, **characterized in that** the curvilinear distance between the orthogonal projection (12) of the radially inner end (10) of the layer of materials (8) on the outer surface of the sidewall (4) and the radially innermost point (13) of the outer surface of the sidewall (4) is between 40% and 65% of the curvilinear distance between a shoulder end (6) and the radially innermost point (13) of the outer surface of the sidewall (4).

8. Tire (1) according to one of the preceding claims, **characterized in that** the layer of materials (8) comprises at least one layer of reinforcing elements oriented in the circumferential direction.

9. Tire (1) according to Claim 8, **characterized in that** the reinforcing elements oriented in the circumferential direction are metallic.

10. Tire (1) according to one of the preceding claims, **characterized in that** the layer of materials (8) comprises at least two layers of reinforcing elements parallel with each other in each layer and crossed from one layer to the next, forming with the circumferential direction angles of between 10° and 45°.

11. Tire (1) according to one of the preceding claims, **characterized in that** the layer of materials (8) comprises at least one layer of polymeric mixtures.

12. Tire (1) according to one of the preceding claims, **characterized in that** it has, on the outer surface of each of the sidewalls (4), a boss (20) extending circumferentially, the radius of curvature of which is between 8 and 20 mm.

13. Tire (1) according to Claim 12, **characterized in that** the curvature of a sidewall (4) has a point of inflexion radially outside the boss (20) and **in that** this point of inflexion is radially inside the shoulder ends (6) of the tire.

14. Tire (21) according to Claim 12 or 13, the tire being fitted on a rim (215) including hooks, **characterized in that** the curvature of a sidewall (24) has a point of inflexion radially inside the boss (220).

15. Use of a tire (1) as described according to one of Claims 1 to 14 for a two-wheel motor vehicle such as a motor cycle.

## Patentansprüche

1. Luftreifen (1), der eine Verstärkungsstruktur von der Art Karkasse (2) aufweist, die von Verstärkungselementen geformt wird, wobei der Luftreifen Wülste (3) aufweist, deren Basis dazu bestimmt ist, auf einen Felgensitz montiert zu werden, wobei jeder Wulst sich radial nach außen durch eine Flanke (4) verlängert, wobei die Flanken radial nach außen an einen Laufstreifen (5) anschließen, wobei die Schnittlinie der Flanken und des Laufstreifens die Schulterenden (6) des Luftreifens definiert, und der unter dem Laufstreifen eine Scheitelverstärkungsstruktur (7) aufweist, **dadurch gekennzeichnet, dass** er in der Zone jeder der Flanken (4) mindestens eine Materialschicht (8) aufweist, die eine Dehnungssteifigkeit in Längsrichtung von mehr als 5000 daN/mm hat, und dass das radial äußere Ende (9) der Materialschicht (8) bezüglich der Schulterenden (6) des Luftreifens radial innen liegt.

2. Luftreifen (21) nach Anspruch 1, **dadurch gekennzeichnet, dass** der radiale Abstand (d2) zwischen dem radial äußeren Ende (29) der Materialschicht (28) und dem radial inneren Ende des Luftreifens (214) zwischen 50% und 80% des radialen Abstands (d1) zwischen einem Schulterende (26) und dem radial inneren Ende (214) des Luftreifens beträgt.

3. Luftreifen nach Anspruch 1 oder 2, **dadurch gekennzeichnet, dass** der radiale Abstand (d3) zwischen dem radial inneren Ende (210) der Materialschicht (28) und dem radial inneren Ende des Luftreifens (214) zwischen 40% und 65% des radialen Abstands (d1) zwischen einem Schulterende (26) und dem radial inneren Ende des Luftreifens (214) beträgt.

4. Luftreifen (21) nach einem der Ansprüche 1 bis 3, wobei der Luftreifen auf eine Nutpartien aufweisende Felge (215) montiert und auf einen Druck von 1,5 Bar aufgepumpt ist, **dadurch gekennzeichnet, dass** der Abstand (D2) zwischen dem radial äußeren Ende (29) der Materialschicht (28) und dem radial äußeren Ende der Nutpartie zwischen 40% und 60% des radialen Abstands (D1) zwischen einem Schulterende (26) und dem radial äußeren Ende der Nutpartie beträgt.

5. Luftreifen (21) nach einem der vorhergehenden Ansprüche, wobei der Luftreifen auf eine Nutpartien aufweisende Felge (215) montiert und auf einen Druck von 1,5 Bar aufgepumpt ist, **dadurch gekennzeichnet, dass** der radiale Abstand (D3) zwischen dem radial inneren Ende (210) der Materialschicht (28) und dem radial äußeren Ende der Nutpartie geringer als 30% des radialen Abstands (D1) zwischen einem Schulterende (26) und dem radial äußeren Ende der Nutpartie ist.

6. Luftreifen (1) nach einem der vorhergehenden Ansprüche, **dadurch gekennzeichnet, dass** der gekrümmte Abstand zwischen der orthogonalen Projektion (11) des radial äußeren Endes (9) der Materialschicht (8) auf die Außenfläche der Flanke (4) und dem radial innersten Punkt (13) der Außenfläche der Flanke (4) zwischen 50% und 80% des gekrümmten Abstands zwischen einem Schulterende (6) und dem radial innersten Punkt (13) der Außenfläche der Flanke (4) beträgt.

7. Luftreifen (1) nach einem der vorhergehenden Ansprüche, **dadurch gekennzeichnet, dass** der gekrümmte Abstand zwischen der orthogonalen Projektion (12) des radial inneren Endes (10) der Materialschicht (8) auf die Außenfläche der Flanke (4) und dem radial innersten Punkt (13) der Außenfläche der Flanke (4) zwischen 40% und 65% des gekrümmten Abstands zwischen einem Schulterende (6) und dem radial innersten Punkt (13) der Außenfläche der Flanke (4) beträgt.

8. Luftreifen (1) nach einem der vorhergehenden Ansprüche, **dadurch gekennzeichnet, dass** die Materialschicht (8) aus mindestens einer Schicht von Verstärkungselementen besteht, die in Umfangsrichtung ausgerichtet sind.

9. Luftreifen (1) nach Anspruch 8, **dadurch gekennzeichnet, dass** die gemäß der Umfangsrichtung ausgerichteten Verstärkungselemente metallisch sind.

10. Luftreifen (1) nach einem der vorhergehenden Ansprüche, **dadurch gekennzeichnet, dass** die Materialschicht (8) aus mindestens zwei Schichten von Verstärkungselementen besteht, die in jeder Schicht parallel zueinander sind und sich von einer Schicht zur anderen kreuzen, indem sie mit der Umfangsrichtung Winkel zwischen 10° und 45° bilden.

11. Luftreifen (1) nach einem der vorhergehenden Ansprüche, **dadurch gekennzeichnet, dass** die Materialschicht (8) aus mindestens einer Schicht von Polymermischungen besteht.

12. Luftreifen (1) nach einem der vorhergehenden Ansprüche, **dadurch gekennzeichnet, dass** er auf der Außenfläche jeder der Flanken (4) eine Wölbung (20) aufweist, die sich in Umfangsrichtung erstreckt und deren Krümmungsradius zwischen 8 und 20 mm liegt.

13. Luftreifen (1) nach Anspruch 12, **dadurch gekennzeichnet, dass** die Krümmung einer Flanke (4) einen Wendepunkt radial außerhalb der Wölbung (20) aufweist, und dass dieser Wendepunkt bezüglich der Schulterenden (6) des Luftreifens radial innen liegt.

14. Luftreifen (21) nach Anspruch 12 oder 13, wobei der Luftreifen auf eine Nutpartien aufweisende Felge (215) montiert ist, **dadurch gekennzeichnet, dass** die Krümmung einer Flanke (24) einen Wendepunkt radial innen bezüglich der Wölbung (220) aufweist.

15. Verwendung eines Luftreifens (1) wie gemäß einem der Ansprüche 1 bis 14 beschrieben für ein motorisiertes Fahrzeug mit zwei Rädern wie ein Motorrad.
